# FASCICULE DE BREVET EUROPEEN

(11) **EP 1 595 727 B1**
(45) Date de publication et mention de la délivrance du brevet: **05.11.2008**
(21) Numéro de dépôt: 05103899.0
(22) Date de dépôt: 10.05.2005
(51) Int. Cl.: B60J 1/16

(54) **Dispositif d'obturation d'une baie ménagée dans la carrosserie d'un véhicule automobile, procédé de fabrication et véhicule automobile correspondants.**
Abschlussvorrichtung für eine Karosserieöffnung eines Fahrzeuges, Herstellungsverfahren und Fahrzeug dazu.
Closing device for an opening in a body of a vehicle, method of manufacturing and correspondig vehicle.

(30) Priorité: 13.05.2004 FR 0405234
(43) Date de publication de la demande: 16.11.2005
(73) Titulaire: Wagon SAS, 79302 Bressuire Cédex (FR)
(72) Inventeur: Destouches, Nicolas, 35650, Le Rheu (FR)
(74) Mandataire: Bioret, Ludovic

(56) Documents cités:
- EP-A- 0 683 064
- EP-A- 0 968 862
- DE-C- 4 038 900
- FR-A- 2 785 234
- US-A- 5 799 449

## Description

Le domaine de l'invention est celui des véhicules automobiles, et plus précisément des baies de tels véhicules. Plus précisément encore, l'invention concerne les baies équipées d'au moins un panneau mobile pouvant obturer ou libérer une ouverture, en fonction des besoins.

Depuis toujours, les véhicules automobiles sont équipés de vitres mobiles, en particulier sur les portières. La solution classique est de prévoir un mécanisme permettant à un panneau vitré de pénétrer au moins en partie à l'intérieur du caisson inférieur de la portière.

Une approche connue consiste à prévoir un dispositif d'obturation de la baie, qui comprend une partie fixe, solidarisée à la carrosserie du véhicule, et un (ou le cas échéant plusieurs) panneau mobile. La solution la plus répandue pour mettre en oeuvre cette technique est l'utilisation d'un cadre de liaison, venant chevaucher les bords de la carrosserie, maintenant la partie fixe, et guidant le panneau mobile.

Le titulaire de la présente demande de brevet a développé une approche permettant de s'affranchir d'un tel cadre, difficile à monter, coûteux, et produisant un décrochement par rapport au plan de la carrosserie.

Selon cette approche, le dispositif d'obturation de baies comprend simplement un panneau fixe, dont les contours correspondent à ceux de la baie, et un panneau mobile, guidé en coulissement par des rails solidaires de la partie fixe (et non d'un cadre de liaison avec la carrosserie). Cette approche permet ainsi de fournir le dispositif d'obturation complètement monté au constructeur, et facilite le montage puisqu'il suffit de coller la partie fixe aux bords de la carrosserie définissant la baie (de la même façon qu'on le ferait pour un panneau fixe).

Cette approche permet en outre d'obtenir un aspect complètement affleurant, que ce soit entre les bords de la partie fixe et les bords de la carrosserie, ou entre les bords de la partie fixe et les bords de la partie mobile.

Un inconvénient de cette technique reste que la fabrication de l'ensemble, et en particulier du panneau fixe, classiquement en verre, est peu aisée. C'est en effet difficile de réaliser une ouverture dans les verres sécurisés destinés à l'automobile.

Par ailleurs, les baies ainsi obtenues restent relativement lourdes du fait qu'elles sont intégralement réalisées en verre.

L'invention a notamment pour objectif de pallier ces inconvénients de l'état de l'art.

Plus précisément, un des objectifs de l'invention est de fournir un dispositif d'obturation d'une baie ménagée dans un véhicule automobile qui permette d'obtenir un aspect parfaitement affleurant, sans qu'il soit nécessaire de réaliser une ouverture (un trou) dans un panneau de verre.

Un autre objectif de l'invention est de fournir un tel dispositif d'obturation, de poids et de coût réduits par rapport aux techniques connues.

Encore un autre objectif de fournir un tel dispositif d'obturation, qui soit simple à réaliser et à monter sur un véhicule.

Ces objectifs, ainsi que d'autres qui apparaîtront plus clairement par la suite, sont atteints selon l'invention à l'aide d'un dispositif d'obturation d'une baie ménagée dans la carrosserie d'un véhicule automobile, comprenant :
- une structure plane, également appelée cadre plan, présentant une surface périphérique destinée à être rapportée sur les bords de ladite baie et comprenant au moins une portion transversale définissant au moins deux ouvertures ;
- au moins un panneau de vitre fixe, venant fermer une première desdites ouvertures ;
- au moins un panneau de vitre mobile, coulissant entre une position fermée, dans laquelle il ferme une seconde desdites ouvertures, et au

Cette approche permet en outre d'obtenir un aspect complètement affleurant, que ce soit entre les bords de la partie fixe et les bords de la carrosserie, ou entre les bords da la partie fixe et les bords de la partie mobile.

Un inconvénient de cette technique reste que la fabrication de l'ensemble, et en particulier du panneau fixe, classiquement en verre, est peu aisée. C'est en effet difficile de réaliser une ouverture dans les verres sécurisés destinés à l'automobile. Selon une autre technique, décrite dans le document EP-A-0 968 862, il a été proposé de reconstituter un tel panneau fixe à partir d'un élément vitré en forme de "C" auquel on accole un paneau vitré.

Par ailleurs, les baies ainsi obtenues en mettant en oeuvre les techniques susmentionnées restent relativement lourdes du fait qu'elles sont intégralement réalisées en verre.

L'invention a notamment pour objectif de pallier ces inconvénients de l'état de l'art.

Plus précisément, un des objectifs de l'invention est de fournir un dispositif d'obturation d'une baie ménagée dans un véhicule automobile qui permette d'obtenir un aspect parfaitement affleurant, sans qu'il soit nécessaire de réaliser une ouverture (un trou) dans un panneau de verre.

Un autre objectif de l'invention est de fournir un tel dispositif d'obturation, de poids et de coût réduits par rapport aux techniques connues.

Encore un autre objectif de fournir un tel dispositif d'obturation, qui soit simple à réaliser et à monter sur un véhicule.

Ces objectifs, ainsi que d'autres qui apparaîtront plus clairement par la suite, sont atteints selon l'invention à l'aide d'un dispositif d'obturation d'une baie ménagée dans la carrosserie d'un véhicule automobile, comprenant :
- une structure plane, également appelée cadre plan, présentant une surface périphérique destinée à être rapportée sur les bords de ladite baie et comprenant au moins une portion transversale définissant au moins deux ouvertures ;
- au moins un panneau de vitre fixe, venant fermer une première desdites ouvertures ;
- au moins un panneau de vitre mobile, coulissant entre une position fermée, dans laquelle il ferme une seconde desdites ouvertures, et au moins une position ouverte, dans laquelle il se trouve parallèle au plan défini par ladite structure plane, et maintenu et guidé par des rails de guidage solidaires de la face de ladite structure tournée vers l'intérieur dudit véhicule,
ladite structure plane, le ou lesdits panneaux de vitre fixes et le ou lesdits panneaux de vitres mobiles, en position fermée, se trouvant dans un même plan, de façon à former un dispositif affleurant.

Ainsi, on obtient un dispositif affleurant assurant les mêmes fonctions que les « baies flush » connues, mais avec une fabrication simplifiée, du fait de la présence de la structure plane, qui évite la réalisation d'une ouverture dans le verre.

Par affleurant, on entend ici, bien sûr, un ensemble affleurant d'une part avec la carrosserie sur laquelle il est rapporté, mais également affleurant, c'est-à-dire sans perturbation de la planéité (due par exemple à un cadre classique), sur toute la surface du dispositif

De façon avantageuse, lesdits rails de guidage sont moulés ou surmoulés sur ladite structure plane.

La fabrication et le montage sont ainsi très simplifiés.

Préférentiellement, ladite structure plane est réalisée en matière plastique. On réduit ainsi le poids, tout en permettant directement la réalisation de différents éléments, par moulage ou surmoulage, tels que les rails.

Ladite structure plane peut ainsi avantageusement porter au moins un des éléments appartenant au groupe comprenant :
- des embouts ;
- des chicanes ;
- des systèmes de fixation ;
- des dispositifs de liaison.

Préférentiellement, ladite structure plane est de couleur noire, pour obtenir un aspect similaire à un verre sérigraphié, et est traitée contre les agressions extérieures, et notamment les rayures et/ou les rayons ultraviolets.

L'invention concerne également un procédé de fabrication d'un dispositif d'obturation tel que décrit ci-dessus. Ce procédé comprend notamment les étapes suivantes :
- obtention d'une structure plane, intégrant lesdits rails de guidage ;
- obtention d'un panneau fixe, et solidarisation de celui-ci à ladite structure plane;
- obtention d'un panneau mobile, et montage de celui-ci sur lesdits rails de guidage.

De façon avantageuse, ladite étape d'obtention d'une structure plane comprend une étape de fabrication d'un cadre en matière plastique et au moins une étape de traitement contre des agressions extérieures, telles qu'une étape de traitement anti-rayure et une étape de traitement anti-UV.

Préférentiellement, ladite étape d'obtention d'une structure plane comprend une étape de moulage ou de surmoulage d'au moins un des éléments appartenant au groupe comprenant :
- lesdits rails de guidage ;
- des embouts ;
- des chicanes ;
- des systèmes de fixation ;
- des dispositifs de liaison.

La solidarisation dudit panneau fixe à ladite structure plane peut notamment être réalisée par encapsulation ou par collage, de façon à fournir un aspect affleurant sur la face du dispositif d'obturation tournée vers l'extérieur dudit véhicule.

Selon une autre approche, ledit panneau fixe peut être surmoulé avec des éléments de solidarisation à ladite structure plane.

Avantageusement, ledit dispositif est ensuite rapporté sur le bord de la carrosserie d'un véhicule automobile par collage, à l'aide d'au moins un cordon de colle venant coller une zone périphérique de ladite structure plane, légèrement éloigné du bord de ladite structure plane.

L'invention concerne également les véhicules automobiles comprenant au moins un dispositif d'obturation tel que décrit ci-dessus.

D'autres caractéristiques et l'avantage de l'invention apparaîtront plus clairement à la lecture de la description suivante d'un mode de réalisation préférentiel de l'invention donnée à titre de simple exemple illustratif et non-limitatif, et des dessins annexés, parmi lesquels :
- la figure 1 présente un dispositif d'obturation selon l'invention, vu du coté correspondant à l'intérieur du véhicule automobile ;
- la figure 2 illustre le cadre plan du dispositif de la figure 1, vu du coté tourné de l'extérieur ;
- la figure 3 illustre un premier mode de solidarisation du panneau fixe à la structure plane, par encapsulation ;
- la figure 4 illustre un autre mode de fixation du panneau fixe à la structure plane par collage.

L'invention concerne donc une nouvelle approche des dispositifs d'obturation affleurant, également appelés « baies flush ». Selon cette approche, la partie fixe, dans laquelle on avait réalisé une ouverture pour le panneau mobile est réalisée en deux parties, une structure plane, ou encadrement, ou cadre plan, et une glace fixe.

Il n'est ainsi plus nécessaire de réaliser dans un panneau de verre une ouverture, mais simplement de solidariser l'encadrement et la glace fixe, pour obtenir, fonctionnellement, un ensemble fixe tel que mis en oeuvre selon les techniques antérieures.

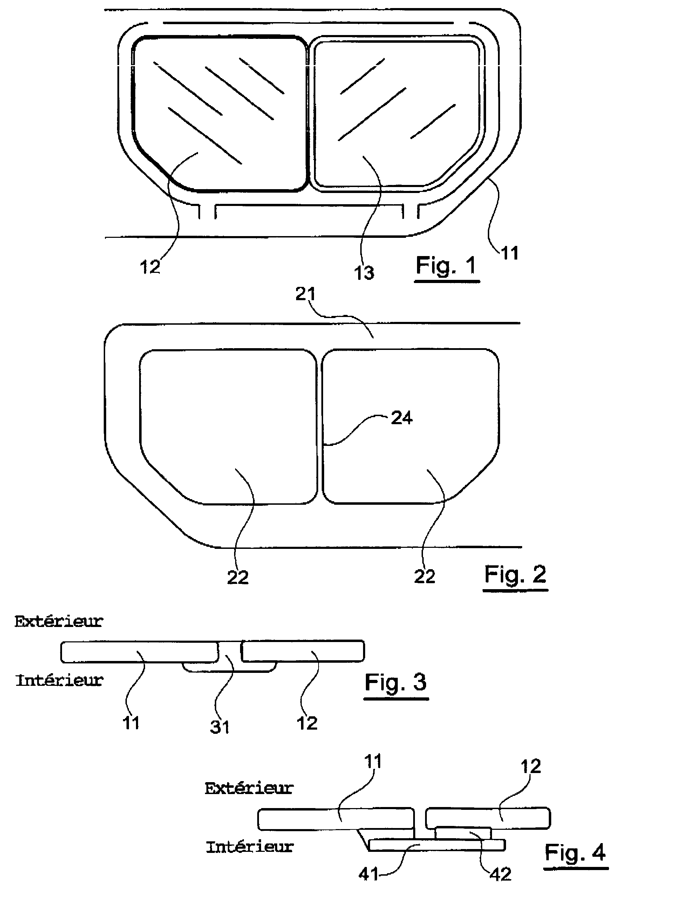

La figure 1 illustre un tel dispositif d'obturation, destiné à équiper une face latérale d'un véhicule.

Elle comprend donc un cadre plan 11 (également présenté en figure 2), un panneau, ou glace, fixe 12, et un panneau, ou glace, mobile 13.

Comme cela apparaît sur la figure 2, le cadre plan 11 présente une zone périphérique 21, dont les bords sont prévus coïncider avec ceux de la baie ménagée dans le véhicule (de façon à pouvoir être collés sur une portion en léger renfoncement dans la carrosserie, et ainsi être affleurant avec cette carrosserie).

Elle présente également deux ouvertures 22 et 23, qui sont respectivement destinées à la glace mobile et à la glace fixe. Une portion transversale 24, reliant les deux bords du cadre finit de définir ces deux ouvertures.

Ce cadre 11 peut avantageusement être réalisé en matière plastique, ce qui permet de réduire le poids, et le coût. Dans ce cas, les ouvertures 22 et 23 peuvent être réalisées par découpe.

Avantageusement, ce cadre 11 est en plastique noir brillant, de façon à obtenir un aspect similaire à celui de la sérigraphie sur une vitre. Des traitements anti-rayures et anti-UV seront préférentiellement appliqués, pour protéger la surface plastique des agressions extérieures.

Puisqu'il est réalisé en plastique, cet encadrement peut en outre facilement intégrer des fonctions complémentaires, par moulage. Ainsi, les rails de guidage en coulissement du panneau mobile 13, et également des embouts, des chicanes, des systèmes de fixation ou de liaison, et plus généralement tout autre élément pouvant participer à l'ensemble du dispositif d'obturation (par exemple pour sa fixation, son étanchéité, l'évacuation de l'eau, la sécurité, l'inviolabilité, la protection contre les intrusions,...).

La mise en oeuvre du panneau mobile 13 peut être similaire à celle des « baies flush » déjà connues, et faisant l'objet de plusieurs brevets au nom du titulaire de la présente demande de brevet.

La glace fixe 12 peut quant à elle être solidarisée à l'encadrement 11 par encapsulation polyuréthane (PU), collage ou tout autre process de fixation adéquat.

A titre d'exemple, la figure 3 illustre une encapsulation qui permet de fixer la glace fixe 12 à l'encadrement 11. Cette encapsulation 31 est réalisée de façon qu'elle vienne chevaucher l'encadrement et la glace fixe sur le coté intérieur du véhicule, pour obtenir une bonne solidarisation. En revanche, à l'extérieur du véhicule, elle est réalisée dans le plan défini par l'encadrement et l'adresse fixe, pour conserver un aspect parfaitement affleurant avec l'ensemble de la baie.

Selon une autre approche, on peut prévoir une solidarisation par collage, comme illustré en figure. Dans ce cas, l'encadrement 11 prévoit une zone de collage 41, en léger décroché vers l'intérieur du véhicule et s'étendant sur les bords de l'ouverture 23. On dépose alors un cordon de colle 42 sur le prolongement 41, et on vient y rapporter la glace fixe 12, d'une façon similaire au collage de l'encadrement lui-même de la carrosserie du véhicule.

Une autre approche pourrait être de mouler la glace fixe 12 avec des moyens de clippage, qui viendront se fixer dans l'encadrement 11, dans des logements prévus à cet effet. Dans ce cas, on pourra rajouter un joint de fmition.

Le dispositif d'obturation ainsi obtenu conserve l'ensemble des avantages des « baies flush », tout en permettant de diminuer la masse et le coût du dispositif de façon importante.

De tels dispositifs peuvent être utilisés sur tout type de baies dans un véhicule automobile et notamment sur des baies horizontales, verticales, inclinées, qu'il s'agisse de vitres arrière, de vitres avant, de vitres latérales ou de pavillons vitrés.

Bien que le mode de réalisation illustré propose un panneau mobile à déplacement horizontal, il est bien sûr possible d'envisager des déplacements dans d'autres directions.

On peut également prévoir, sur un même dispositif, plusieurs panneaux fixes et/ou plusieurs panneaux mobiles.

## Revendications

1. Dispositif d'obturation d'une baie ménagée dans la carrosserie d'un véhicule automobile comprenant :
- une structure plane (11);
- au moins un panneau de vitre fixe (12) ;
- au moins un panneau de vitre mobile (13), coulissant entre une position formée et au moins une position ouverte, dans laquelle il se trouve parallèle au plan défini par ladite structure plane (11), et maintenu et guidé par des rails de guidage solidaires de la face de ladite structure plane (11) tournée vers l'intérieur dudit véhicule,
ladite structure plane (11), le ou lesdits panneaux de vitre fixes (12) et le ou lesdits panneaux de vitres mobiles (13), en position fermée, se trouvant dans un même plan, de façon à former un dispositif affleurant
**caractérisé en ce que** ladite structure plane (11) présente une surface périphérique destinée à être rapportée sur les bords de ladite baie et comprend au moins une portion transversale (24) définissant au moins deux ouvertures (22 et 23),
**en ce que** ledit au moins un panneau de vitre fixe (12) vient fermer une première desdites ouvertures,
et **en ce que** ledit au moins un panneau de vitre mobile ferme une seconde desdites ouvertures.

2. Dispositif d'obturation selon la revendication 1, **caractérisé en ce que** lesdits rails de guidage sont moulés ou surmoulés sur ladite structure plane (11).

3. Dispositif d'obturation selon l'une quelconque des revendications 1 et 2, **caractérisé en ce que** ladite structure plane (11) est réalisée en matière plastique.

4. Dispositif d'obturation selon l'une quelconque des revendications 1 à 3, **caractérisé en ce que** ladite structure plane (11) est traitée contre les rayures et/ou les rayons ultraviolets.

5. Dispositif d'obturation selon l'une quelconque des revendications 1 à 4, **caractérisé en ce que** ladite structure plane (11) porte au moins un des éléments appartenant au groupe comprenant :
- des embouts ;
- des chicanes ;
- des systèmes de fixation ;
- des dispositifs de liaison.

6. Procédé de fabrication d'un dispositif d'obturation selon l'une quelconque des revendications 1 à 5, **caractérisé en ce qu'**il comprend les étapes suivantes :
- obtention d'une structure plane (11), intégrant lesdits rails de guidage ;
- obtention d'un panneau fixe (12), et solidarisation de celui-ci à ladite structure plane (11) ;
- obtention d'un panneau mobile (13), et montage de celui-ci sur lesdits rails de guidage.

7. Procédé de fabrication selon la revendication 6, **caractérisé en ce que** ladite étape d'obtention d'une structure plane (11) comprend une étape de fabrication d'une structure en matière plastique et au moins une étape de traitement contre des agressions extérieures, telles qu'une étape de traitement anti-rayure et une étape de traitement anti-UV.

8. Procédé de fabrication selon l'une quelconque des revendications 6 et 7, **caractérisé en ce que** ladite étape d'obtention d'une structure plane (11) comprend une étape de moulage ou de surmoulage d'au moins un des éléments appartenant au groupe comprenant:
- lesdits rails de guidage ;
- des embouts ;
- des chicanes ;
- des systèmes de fixation;
- des dispositifs de liaison.

9. Procédé de fabrication selon l'une quelconque des revendications 6 à 8, **caractérisé en ce que** la solidarisation dudit panneau fixe à ladite structure plane (11) est réalisée par encapsulation ou par collage, de façon à fournir un aspect affleurant sur la face du dispositif d'obturation tournée vers l'extérieur dudit véhicule.

10. Procédé de fabrication selon l'une quelconque des revendications 6 à 9, **caractérisé en ce que** ledit panneau fixe est surmoulé avec des éléments de solidarisation à ladite structure plane (11).

11. Procédé selon l'une quelconque des revendications 6 à 10, **caractérisé en ce que** ledit dispositif est rapporté sur le bord de la carrosserie d'un véhicule automobile par collage, à l'aide d'au moins un cordon de colle venant coller une zone périphérique (21) dudit cadre plan (11), légèrement éloigné du bord de ladite structure plane (11).

12. Véhicule automobile, **caractérisé en ce qu'**il comprend au moins un dispositif d'obturation selon l'une quelconque des revendications 1 à 5.

## Claims

1. Closure device for closing an aperture arranged in the body of a motor vehicle, comprising:
- a plane structure (11);
- at least one fixed window panel (12);
- at least one movable window panel (13), sliding between a closed position and at least one open position, in which it is parallel to the plane defined by said plane structure (11), and held and guided by guide rails firmly attached to the face of said plane structure (11) that faces towards the interior of said vehicle,
said plane structure (11), the fixed window panel (12) or panels (12) and the movable window panel (13) or panels (13), when in the closed position, being in the same plane, so as to constitute a flush device,
wherein said plane structure (11) has a peripheral surface intended to be joined onto the edges of said aperture, and comprises at least one transverse portion (24) defining at least two openings (22 and 23),
and said at least one fixed window panel (12) effects closure of a first of said openings,
and said at least one movable window panel closes a second of said openings.

2. Closure device according to Claim 1, wherein said guide rails are moulded onto or encapsulated, on said plane structure (11).

3. Closure device according to either of Claims 1 or 2, wherein said plane structure (11) is made of plastic material.

4. Closure device according to any one of Claims 1 to 3, wherein said plane structure (11) is treated against scratches and/or ultraviolet rays.

5. Closure device according to any one of Claims 1 to 4, wherein said plane structure (11) sustains at least one of the elements belonging to the group comprising:
- end pieces;
- baffles;
- mounting systems;
- connection devices.

6. Method for production of a closure device according to any one of Claims 1 to 5, wherein it comprises the following steps:
- obtaining a plane structure (11) incorporating said guide rails;
- obtaining a fixed panel (12), and rendering the latter firmly attached to said plane structure (11);
- obtaining a movable panel (13), and mounting the latter on said guide rails.

7. Method for production according to Claim 6, wherein said step of obtaining a plane structure (11) comprises a step of producing a structure from plastic material and at least one step of treating against external attack, such as an anti-scratch treatment step and an anti-UV treatment step.

8. Method for production according to either of Claims 6 or 7, wherein said step of obtaining a plane structure (11) comprises a step of moulding-on or encapsulating-on at least one of the elements belonging to the group comprising:
- said guide rails;
- end pieces;
- baffles;
- mounting systems;
- connection devices.

9. Method for production according to any one of Claims 6 to 8, wherein rendering said fixed panel firmly attached to said plane structure (11) is realized by encapsulation or by adhesive bonding, so as to provide a flush appearance on the face of the closure device that faces towards the exterior of said vehicle.

10. Method for production according to any one of Claims 6 to 9, wherein said fixed panel is encapsulated with elements for rendering firmly attached to said plane structure (11).

11. Method according to any one of Claims 6 to 10, wherein said device is joined onto the edge of the body of a motor vehicle by adhesive bonding, with the aid of at least one seal of adhesive effecting bonding of a peripheral zone (21) of said plane frame (11), slightly distant from the edge of said plane structure (11).

12. Motor vehicle, wherein it comprises at least one closure device according to any one of Claims 1 to 5.

## Patentansprüche

1. Abschlussvorrichtung für eine Karosserieöffnung eines Fahrzeugs, umfassend:
- eine plane Struktur (11),
- mindestens eine feste Fensterscheibe (12),
- mindestens eine bewegliche Fensterscheibe (13), die zwischen einer geschlossenen Position und mindestens einer geöffneten Position verschiebbar ist, in der sie parallel zu der durch die plane Struktur (11) definierten Ebene liegt und von Führungsschienen gehalten und geführt wird, die fest mit der zum Innenraum des Fahrzeugs gewandten Seite dieser planen Struktur (11) verbunden sind,
wobei die plane Struktur (11), die feste(n) Fensterscheibe(n) (12) und die bewegliche(n) Fensterscheibe(n) (13) in der geschlossenen Position in derselben Ebene liegen, so dass sie eine bündig abschließende Vorrichtung bilden,
**dadurch gekennzeichnet, dass** die plane Struktur (11) eine Umfangsfläche aufweist, die dazu dient, auf die Ränder der Karosserieöffnung aufgesetzt zu werden, und mindestens einen quer verlaufenden Abschnitt (24) umfasst, der mindestens zwei Öffnungen (22 und 23) begrenzt,
und dass diese mindestens eine feste Fensterscheibe (12) eine erste dieser Öffnungen verschließt
und dass diese mindestens eine bewegliche Fensterscheibe eine zweite dieser Öffnungen verschließt.

2. Abschlussvorrichtung nach Anspruch 1, **dadurch gekennzeichnet, dass** die Führungsschienen geformt oder an diese plane Struktur (11) angeformt sind.

3. Abschlussvorrichtung nach einem beliebigen der Ansprüche 1 und 2, **dadurch gekennzeichnet, dass** die plane Struktur (11) aus Kunststoff besteht.

4. Abschlussvorrichtung nach einem beliebigen der Ansprüche 1 bis 3, **dadurch gekennzeichnet, dass** die plane Struktur (11) zum Schutz vor Kratzern und/oder ultravioletter Strahlung behandelt ist.

5. Abschlussvorrichtung nach einem beliebigen der Ansprüche 1 bis 4, **dadurch gekennzeichnet, dass** die plane Struktur (11) mindestens eines der Elemente aus der folgenden Gruppe trägt:
- Anschlussstücke,
- Schwallblechen,
- Befestigungssysteme,
- Verbindungsvorrichtungen.

6. Herstellungsverfahren für eine Abschlussvorrichtung nach einem beliebigen der Ansprüche 1 bis 5, **dadurch gekennzeichnet, dass** es die folgenden Schritte umfasst.
- Erhalten einer planen Struktur (11), die die Führungsschienen beinhaltet;
- Erhalten einer festen Scheibe (12) und Verbinden dieser Scheibe mit der planen Struktur (11);
- Erhalten einer beweglichen Scheibe (13) und Montage dieser Scheibe an den Führungsschienen.

7. Herstellungsverfahren nach Anspruch 6, **dadurch gekennzeichnet, dass** der Schritt zum Erhalten einer planen Struktur (11) einen Schritt zur Herstellung einer Struktur aus Kunststoff und mindestens einen Schritt zur Behandlung gegen aggressive Außeneinwirkungen wie beispielsweise einen Schritt zur Kratzschutzbehandlung oder UV-Schutz-Behandlung umfasst.

8. Herstellungsverfahren nach einem beliebigen der Ansprüche 6 und 7, **dadurch gekennzeichnet, dass** der Schritt zum Erhalten einer planen Struktur (11) einen Schritt zum Formen oder Anformen mindestens eines der Elemente aus der folgenden Gruppe umfasst:
- Führungsschienen,
- Anschlussstücke,
- Schwallblechen,
- Befestigungssysteme,
- Verbindungsvorrichtungen.

9. Herstellungsverfahren nach einem beliebigen der Ansprüche 6 bis 8, **dadurch gekennzeichnet, dass** das Befestigen der festen Scheibe an der planen Struktur (11) durch Vergießen oder Kleben erfolgt, so dass die zur Fahrzeugaußenseite gewandte Seite der Abschlussvorrichtung bündig aussieht.

10. Herstellungsverfahren nach einem beliebigen der Ansprüche 6 bis 9, **dadurch gekennzeichnet, dass** an die feste Scheibe Elemente zum Befestigen an der planen Struktur (11) angeformt werden.

11. Verfahren nach einem beliebigen der Ansprüche 6 bis 10, **dadurch gekennzeichnet, dass** die Vorrichtung durch Kleben mit Hilfe von mindestens einer Klebefuge, die einen Umfangsbereich (21) dieses planen Rahmens (11) leicht vom Rand der planen Struktur (11) entfernt anklebt, auf den Rand der Karosserie eines Fahrzeugs aufgesetzt wird.

12. Fahrzeug, **dadurch gekennzeichnet, dass** es mindestens eine Abschlussvorrichtung nach einem beliebigen der Ansprüche 1 bis 5 umfasst.
